# EUROPEAN PATENT SPECIFICATION

(11) **EP 3 486 337 B1**
(45) Date of publication and mention of the grant of the patent: **26.05.2021**
(21) Application number: 17827975.8
(22) Date of filing: 13.07.2017
(51) Int. Cl.: C22B 15/00, C22B 1/02, C22B 5/08, C04B 18/14, C22B 3/00, C22B 3/04, C22B 11/02

(54) **METHOD FOR CONCENTRATING AND RECOVERING NOBLE METALS**
VERFAHREN ZUR VERDICHTUNG UND RÜCKGEWINNUNG VON EDELMETALLEN
PROCÉDÉ DE CONCENTRATION ET DE RÉCUPÉRATION DE MÉTAUX NOBLES

(30) Priority: 14.07.2016 KR 20160089431; 07.07.2017 KR 20170086692
(43) Date of publication of application: 22.05.2019
(73) Proprietor: Korea Institute Of Geoscience & Mineral Resources, Daejeon 34132 (KR)
(72) Inventor: PARK, Hyun-Sik, Daejeon 34094 (KR); KIM, Min-Seok, Daejeon 35355 (KR); LEE, Jae-Chun, Daejeon 34032 (KR); HA, Min-Chul, Daejeon 35398 (KR); KIM, Soo-Kyung, Sejong 30100 (KR); SOHN, Jeong-Soo, Daejeon 34140 (KR); SHIN, Do-Yun, Daejeon 35251 (KR); YANG, Dong-Hyo, Sejong 30130 (KR); JEONG, Jin-Gi, Daegu 35268 (KR); KIM, Young-Jae, Daejeon 35219 (KR)
(74) Representative: Gulde & Partner
(86) International application number: PCT/KR2017/007531
(87) International publication number: WO 2018/012905

(56) References cited:
- EP-A2- 0 508 542
- JP-A- 2006 307 283
- KR-A- 20060 018 496
- KR-A- 20120 055 350
- KR-A- 20140 115 568
- KR-B1- 101 570 780
- US-A1- 2010 275 730
- JIRANG CUI ET AL: "Metallurgical recovery of metals from electronic waste: A review", JOURNAL OF HAZARDOUS MATERIALS, vol. 158, no. 2-3, 30 October 2008 (2008-10-30), pages 228-256, XP055467290, AMSTERDAM, NL ISSN: 0304-3894, DOI: 10.1016/j.jhazmat.2008.02.001

## Description

### [Technical Field]

The present invention relates to a method for concentrating and recovering noble metals, and more particularly, to a method for concentrating and recovering noble metals contained in a copper-containing material and gold concentrate by treating both materials at the same.

### [Background Art]

Generally, most of the gold smelting process uses cyanidation, and gold and silver are melted with cyanide and precipitated with zinc to be recovered. However, in the case of wet cyanidation, chemicals such as cyanide (NaCN, KCN), zinc, oxidizing agents, and the like are used, which induce various environmental problems. In Korea, where regulations on the use or emission of cyanide are established, cyanidation methods are not used for gold smelting.

Meanwhile, the amount of industrial waste such as a printed circuit board is rapidly increasing along with the increase in the speed of development of information and communication equipment. Thus, environmental pollution caused by the waste is becoming a social problem. Apart from the environmental problem, since the noble metals contained in the wastes such as the printed circuit boards and the like have high added value as raw materials in the high-tech industry, in terms of resource utilization, it is highly useful to recover and recycle the noble metals.

Printed circuit boards mounted on information and communication devices such as waste mobile devices, waste electronic devices, and the like contain noble metals such as gold, silver, platinum, palladium and rhodium as well as valuable metals such as copper, tin and nickel. The content of the noble metals to be recovered depends on the type of mobile device and the year of production, but roughly 240-400 g/T of gold, 2000-3000 g/T of silver and 10-100 g/T of palladium are contained. Also, 5-15 wt% of copper, 0.1-0.2 wt% of nickel, and 0.3-0.7 wt% of tin are contained. Therefore, a method of recovering not only noble metals such as gold, silver, and palladium and the like but also recovering copper by using the printed circuit board has been actively studied. However, a method of recovering gold using resources containing copper to increase the purity of gold in the gold concentrate has not been disclosed yet.

Prior art related to this is a non-burning and non-cyanide method for regenerating a closed printed circuit board disclosed in Korean Granted Patent Publication No. 10-1570780 (publication date: November 20, 2015).

Another prior art related to this is a method for recycling precious metal from used printed circuit boards disclosed in United State Patent Publication No. 2010-0275730 (publication date: November 04, 2010).

### [Detailed Description of the Invention]

### [Technical Problem]

Accordingly, the present invention is directed to providing a method of smelting a gold concentrate, which is difficult to recover a high-purity noble metal therefrom by using a dry reduction method due to low concentration of the noble metal, using a copper-containing material and concentrating noble metals within the copper-containing material to recover the gold concentrate while at the same time recovering copper.

The problems to be solved by the present invention are not limited to the above-mentioned problem(s), and another problem(s) not mentioned can be clearly understood by those skilled in the art from the following description.

### [Technical Solution]

In order to achieve the above-described object, an aspect of the present invention is directed to providing a method for concentrating and recovering noble metals, including, crushing a copper-containing material and preparing a mixture by mixing the same with same with a gold concentrate (step 1); oxidizing and roasting the prepared mixture by heat-treating (step 2); melting the oxidized and roasted mixture to separate and recover slag and crude metal (step 3); and electrolytic leaching the crude metal to concentrate the noble metal into an electrolytic leach residue (step 4).

In one embodiment, the noble metal may be any one or two or more selected from the group consisting of gold, silver, platinum, palladium, and rhodium.

In one embodiment, the copper-containing material of the above-mentioned step 1 may be one or more selected from the group consisting of a printed circuit board, a waste printed circuit board, and a by-product from a printed circuit board manufacturing process.

In one embodiment, the crushing of the above-mentioned step 1 may be performed such that the copper-containing material has a particle size of 1 mm to 10 mm.

In one embodiment, the mixing weight ratio of the copper-containing material and the gold concentrate of the above-mentioned step 1 may be from 1 : 0.1 to 1 : 2.

In one embodiment, the heat-treatment temperature in the above-mentioned step 2 may be 600 °C to 900 °C.

In one embodiment, the oxidizing and roasting of the above-mentioned step 2 may be carried out in a rotary kiln or a flow roasting furnace, and may be carried out in an oxygen atmosphere by introducing atmospheric environment or oxygen.

In one embodiment, the oxidizing and roasting of the above-mentioned step 2 may further include treating a waste gas to remove noxious gas generated during oxidizing and roasting of a crushed product.

In one embodiment, a melting temperature of the above-mentioned step 3 may range from 1300 °C to 1700 °C.

In one embodiment, the above-mentioned step 3 may further include melting the oxidized and roasted mixture and adding a boron compound to a slag that is generated.

In one embodiment, the boron compound in the above-mentioned step 3 may be one or more selected from the group consisting of borax (Na₂B₄O₇·10H₂O), sodium borate (Na₂B₄O₇), sodium meta-borate (NaBO₂) and hydrates thereof.

In one embodiment, a boron compound added in the above-mentioned step 3 may be added in a weight ratio of 10 wt% to 50 wt% with respect to the slag.

In one embodiment, the boron compound may be added in the above-mentioned step 3 such that the slag is composed to include, 30.8 wt% to 58.8 wt% of silica (SiO₂); 0.1 wt% to 20 wt% of alumina (Al₂O₃); 7.8 wt% to 20.7 wt% of divalent iron oxide (FeO); 9.3 wt% to 24.9 wt% of trivalent iron oxide (Fe₂O₃); 4.2 wt% to 10.9 wt% of calcium oxide (CaO); 1.25 wt% to 10.7 wt% of sodium oxide (Na₂O); and 8.3 wt% to 21.6 wt% of boron oxide (B₂O₃).

In one embodiment, in the above-mentioned step 4, the crude metal may be subject to electrolytic leaching with a current density of 5 A/cm² to 40 A/cm².

In one embodiment, the electrolytic leaching of the crude metal of the above-mentioned step 4 may further include recovering copper from a cathode upon electrolytic leaching.

In one embodiment, the above-mentioned step 4 may acid leach the electrolytic leach residue to recover the noble metal.

### [Advantageous Effects]

According to the present invention, gold of high purity can be recovered by using a gold concentrate, which is difficult to recover gold therefrom with dry smelting due to low purity of gold. In addition, among copper-containing materials, a printed circuit board of a waste electronic device such as a waste mobile phone is oxidized and roasted together with the gold concentrate to be melted, and it is possible to efficiently concentrate and recover valuable metals such as copper and noble metals including gold.

Therefore, even in cases where gold content is very low, such as with a gold concentrate and a waste mobile phone printed circuit board, it is advantageous in that noble metal such as gold can be concentrated and recovered, and at the same time, copper can be recovered.

It should be understood that the effects of the present invention are not limited to the effects described above, but include all effects that can be deduced from the detailed description of the present invention or the configuration of the invention described in the claims.

### [Description of the Drawings]

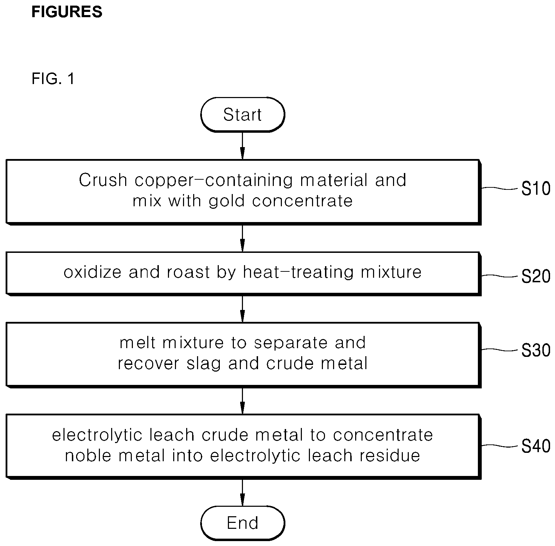

FIG. 1 is a process flow chart showing a process of a method for concentrating and recovering noble metals according to an embodiment of the present invention.
FIG. 2 shows photographs of results of each process step according to a method for concentrating and recovering noble metals according to an embodiment of the present invention.
FIG. 3 and FIG. 4 are photographs of an electrolytic leach residue and a copper electrodeposit formed on a cathode in a method for concentrating and recovering noble metals according to an embodiment of the present invention.

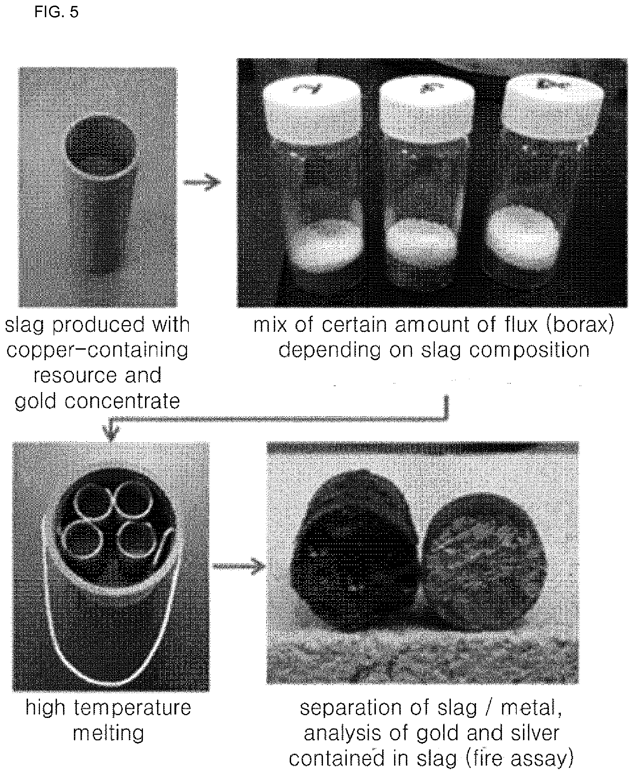

FIG. 5 is a schematic view showing another example of a method for concentrating and recovering noble metals according to an embodiment of the present invention.

### [Best Mode for carrying out the Invention]

Hereinafter, preferred embodiments of the present invention will be described in detail with reference to the accompanying drawings.

The advantages and features of the present and the manner of accomplishing it will become apparent with reference to the embodiments described in detail below with reference to the accompanying drawings.

The present invention may, however, be embodied in many different forms and should not be construed as limited to the exemplary embodiments set forth herein. Rather, these embodiments are provided so that this invention will be thorough and complete, and will fully convey the scope of the invention to those skilled in the art. To fully disclose the scope of the invention to those skilled in the art, and the invention is only defined by the scope of the claims.

In the following description of the present invention, a detailed description of known functions and configurations incorporated herein will be omitted when it may make the subject matter of the present invention rather unclear.

According to an aspect of the present invention, a method for concentrating and recovering noble metals is provided, the method including,
crushing a copper-containing material and preparing a mixture by mixing the same with a gold concentrate (step 1) in step S10;
oxidizing and roasting the prepared mixture by heat-treating (step 2) in step S20;
melting the oxidized and roasted mixture to separate and recover slag and crude metal (step 3) in step S30; and
electrolytic leaching the crude metal to concentrate the noble metal into an electrolytic leach residue (step 4) in step S40.

Hereinafter, each step of a method for concentrating and recovering noble metals according to one embodiment of the present invention will be described in detail.

In a method for concentrating and recovering noble metals according to an embodiment of the present invention, in the above-mentioned step 1 in step S10, a copper-containing material is crushed and a mixture mixed with gold concentrate is prepared.

In addition to copper, the copper-containing material of the above-mentioned step 1 may include, iron, nickel, tin, lead, aluminum, zinc and the like, and may include noble metals such as gold, silver, platinum, palladium and rhodium.

The crushing of the above-mentioned step 1 may be performed via a jaw crusher and a roll crusher or the like.

The crushing of the above-mentioned step 1 can be carried out so that the copper-containing material has a particle size of 1 mm to 10 mm, and preferably a particle size of 1 mm to 5 mm. If the particle size of the copper-containing material is less than 1 mm, there is a problem that energy waste is caused due to excessive treatment in facilitating the use of the copper-containing material in a subsequent treatment process. If the particle size of the copper-containing material is more than 10 mm, there may be a problem that the nonmetal component cannot be sufficiently removed during heat-treatment after being mixed with the gold concentrate in a subsequent step. Therefore, it is preferable for the crushing to be carried out such that the copper-containing material has a particle size range as described above.

The copper-containing material of the above-mentioned step 1 may be one or more selected from the group consisting of a printed circuit board, a waste printed circuit board, and a by-product from a printed circuit board manufacturing process. At this time, before the crushing, the printed circuit board may be cut to be made into scraps first.

The copper-containing material of the above-mentioned step 1 may contain copper, noble metals of gold, silver, platinum, palladium, and rhodium and may include non-metallic plastics, but is not necessarily limited to the same.

In the above-mentioned step 1, a gold concentrate is mixed along with a copper-containing material so that the noble metal and valuable metal contained in both materials can be recovered through a subsequent treatment process. The noble metal may be gold, silver, platinum, palladium and rhodium, and the valuable metal may be nickel, tin, and the like.

The gold concentrate of the above-mentioned step 1 may be in the form of a powder, and preferably has a particle size of 10 to 200 *µ*m. The subsequent oxidizing and roasting, and melting treatment can be facilitated in the above-mentioned gold concentrate particle size range.

The gold concentrate of the above-mentioned step 1 may include silica, iron oxide, calcium oxide, and the like.

The mixing weight ratio of the copper-containing material and the gold concentrate of the above-mentioned step 1 may be 1 : 0.1 to 1 : 2, and preferably 1 : 0.5 to 1 : 2. If the mixing weight ratio is less than 1: 0.1, there is a risk that the concentration efficiency of gold contained in the gold concentrate may be lowered in the subsequent melting step. If mixed such that the mixing weight ratio exceeds 1 : 2, there is a risk that the sulfide in the gold concentrate cannot be easily removed in the subsequent oxidizing and roasting. Therefore, it is preferable that the copper-containing material and the gold concentrate in the above-mentioned range are mixed within the above-mentioned range.

In method for concentrating and recovering noble metals according to an embodiment of the present invention, in the above-mentioned step 2 in S20, the prepared mixture is heat-treated to be oxidized and roasted.

Since the gold concentrate has a very low gold concentration of 200 g/T or less, it is necessary to change the sulfide contained in the gold concentrate to recover high purity gold.

The oxidizing and roasting in the above-mentioned step 2 can oxidize sulfide within the gold concentrate to remove sulfur dioxide (SO₂) as a gas. When the sulfur component in the mixture is removed as a sulfur dioxide gas, the recovery rate of the noble metal can be increased greatly.

The heat-treatment temperature in the oxidizing and roasting in the above-mentioned step 2 is preferably 600 to 900 °C. If the heat-treatment temperature is less than 600 °C, the removal of sulfur in the mixture may be performed insufficiently, and there is a problem in that it is difficult to remove volatile components that can be included in the copper-containing material in the mixture. If the heat-treatment temperature is higher than 900 °C, the mixture may be melted and problems may occur wherein sulfur is not sufficiently removed, and it becoming difficult to concentrate and recover noble metal in a subsequent step. Therefore, it is preferable that heat-treatment for oxidizing and roasting is performed in the temperature range described above.

The oxidizing and roasting of the above-mentioned step 2 may be carried out in a rotary kiln or a flow roasting furnace and may be carried out in an atmospheric environment and oxygen atmosphere.

The oxidizing and roasting of the above-mentioned step 2 may further include a waste gas treatment step to remove noxious gas generated from the mixture. The waste gas may include sulfur dioxide as a main component and may be removed through an electrostatic precipitator or a bag filter.

In a method for concentrating and recovering noble metals according to an embodiment of the present invention, the above-mentioned step 3 in S30 melts the oxidized and roasted mixture to separate and recover slag and crude metal.

The above-mentioned step 3 may be performed by heating and melting the oxidized and roasted mixture at 1300 °C to 1700 °C. If the melting temperature is lower than 1300 °C, the generated slag cannot be easily separated, and a problem may occur wherein the noble metal in the mixture cannot be concentrated as a crude metal. If the melting temperature exceeds 1700 °C, there is a possibility of excessive energy waste occurring when concentrating and recovering noble metal from the mixture. If melting is performed in the above-mentioned temperature range, the crude metal which is mainly composed of copper, and FeO-SiO₂-based slag, can be easily separated. The concentration of gold contained in the concentrated crude metal ranges from 200 g/T to 20,000 g/T.

The above-mentioned step 3 may further include melting the oxidized and roasted mixture and adding a boron compound into the generated slag.

The addition of the boron compound in the above-mentioned step 3 allows the noble metal that can be contained in the slag to be more effectively separated.

The boron compound addition in step 3 is preferably carried out in an atmospheric environment.

The boron compound in step 3 is preferably borax (Na₂B₄O₇·10H₂O), sodium borate (Na₂B₄O₇), sodium meta-borate (NaBO₂) and hydrates thereof.

The boron compound added in the above-mentioned step 3 is preferably added in an amount of 10 wt% to 50 wt% with respect to the generated slag. If the boron compound is added in an amount of less than 10 wt% with respect to the slag, it is possible that the noble metal that may be contained in the slag may not be sufficiently separated. If the boron compound is added in an amount exceeding 50 wt%, the structure and physiochemical characteristics of the slag changes, so a problem may occur wherein the solubility of the noble metal contained in the slag may decrease. Therefore, it is preferable that the boron compound is added in the above-mentioned weight ratio.

The boron compound of the above-mentioned step 3 may be added such that the slag includes,
30.8 wt% to 58.8 wt% of silica (SiO₂);
0.1 wt% to 20 wt% of alumina (Al₂O₃);
7.8 wt% to 20.7 wt% of divalent iron oxide (FeO);
9.3 wt% to 24.9 wt% of trivalent iron oxide (Fe₂O₃);
4.2 wt% to 10.9 wt% of calcium oxide (CaO);
1.25 wt% to 10.7 wt% of sodium oxide (Na₂O); and
8.3 wt% to 21.6 wt% of boron oxide (B₂O₃).

The amount of the boron compound added in the above-mentioned step 3 may be determined depending on the content of silica and alumina that may be contained in the copper-containing material and the content of iron oxide (FeO) and silica that may be contained in the gold concentrate.

After the addition of the boron compound in the above-mentioned step 3, precipitation is further performed by heat-treatment at a temperature of 1300 °C to 1500 °C for 1 to 8 hours to easily separate noble metal that can be contained in the slag.

After the addition of the boron compound in the above-mentioned step 3, the separated slag may contain a gold content of less than 3 ppm and a silver content of less than 2.5 ppm.

In the method for concentrating and recovering noble metals according to an embodiment of the present invention, in the above-mentioned step 4 in step S40, the crude metal is subject to electrolytic leaching such that the noble metal is concentrated into an electrolytic leach residue.

The above-mentioned step 4 is a step that may be performed through electrolytic leaching in which an anode composed of the crude metal; a cathode; and an electrolyte is provided.

Upon electrolytic leaching of the above-mentioned step 4, the copper component within the crude metal may be separated to be electrodeposited to the cathode.

The electrolytic leaching of the crude metal of the above-mentioned step 4 may further include recovering copper from a cathode upon electrolytic leaching.

In the electrolytic leaching of the above-mentioned step 4, the current density is preferably 5 A/cm² to 40 A/cm². If the current density is less than 5 A/cm², there is a problem that the dissolution rate is low which makes it necessary to perform electrolysis for a long time. If the current density exceeds 40 A/cm², a problem may occur wherein the reaction may be stopped due decrease in dissolution rate by the application of excessive current and sudden rise in voltage. Therefore, it is preferable that electrolytic leaching is performed in the above-mentioned cathode current density range.

A large amount of copper contained in the copper-containing material can be recovered from the cathode through electrolytic leaching in the above-mentioned step 4. Various noble metals including gold contained in the mixture can be concentrated and formed into an electrolytic leach residue (anode slime). The noble metal may be one or more selected from the group consisting of gold, silver, platinum, palladium, and rhodium.

The electrolytic leach residue (anode slime) formed through the electrolytic leaching in the above-mentioned step 4 is acid-dissolved with sulfuric acid at a concentration of 2 mol/L to 5 mol/L or the like in a reducing agent atmosphere such as hydrogen peroxide to leave only the noble metal in a solid phase and the other metals, including copper, can be dissolved and separated. The noble metal solid phase thus formed is dissolved again in a hydrochloric acid solution having a concentration of 3 mol/L to 6 mol/L. Thereby, silver can be precipitated and separated from the noble metal component, in the form of silver chloride (AgCI) as a solid phase. In the solution in which noble metals such as dissolved gold and the like is included, divalent iron ions can be added for reduction precipitation for recovery at a purity of 99% or more.

Hereinafter, the present invention will be described in more detail with reference to Examples and Experimental Examples. However, the following Examples and Experimental examples are for illustrative purposes only and are not intended to limit the scope of the present invention.

### <Example 1> Recovery of noble metal using a waste mobile phone printed circuit board

Step 1: As a copper-containing material, a cut waste mobile phone scrap was prepared into a crushed product having a size of 1 to 10 mm. Next, a commercially available gold concentrate (100 *µ*m, 200 ppm) was prepared and 200 parts by weight was mixed with respect to 100 parts by weight of the crushed product.

Step 2: The above mixture was placed in a flow roasting furnace, and the mixture was heated to 900 °C while oxygen was introduced to perform oxidizing and roasting.

Step 3: The oxidized and roasted mixture was heated again to 1400 °C to be smelted, and after confirming that slag was formed, the slag and crude metal was separated and recovered.

Step 4: After working the crude metal into a rectangular anode form, in a pyrex electrolytic bath containing 1 mol/L sulfuric acid as an electrolyte and a stainless steel plate as a cathode, a constant current of 10 mA/cm² was applied for electrolytic leaching, to concentrate noble metal to 4 times or more of the initial content in the electrolytic leach residue, and a powder form of copper having a purity of 90% or more was recovered at the cathode.

Afterwards, 4 mol/L of sulfuric acid containing H₂O₂ was used to dissolve the electrolytic leach residue in which noble metal was concentrated at 80 °C and then leaving only the noble metal in a solid phase, other metals including copper was dissolved and separated. A sulfuric acid leach residue, in which noble metal is concentrated about three times as much as that contained in the electrolytic leach residue, is dissolved again in a 5 mol/L hydrochloric acid solution in which hydrochloric acid was added as an oxidizing agent. Thus silver is precipitated and separated as AgCI and the dissolved gold is reduced and precipitated with Fe²⁺ ions to be recovered with a purity of 99% or more.

### <Experimental Example 1> Confirmation of noble metal concentration and recovery of copper

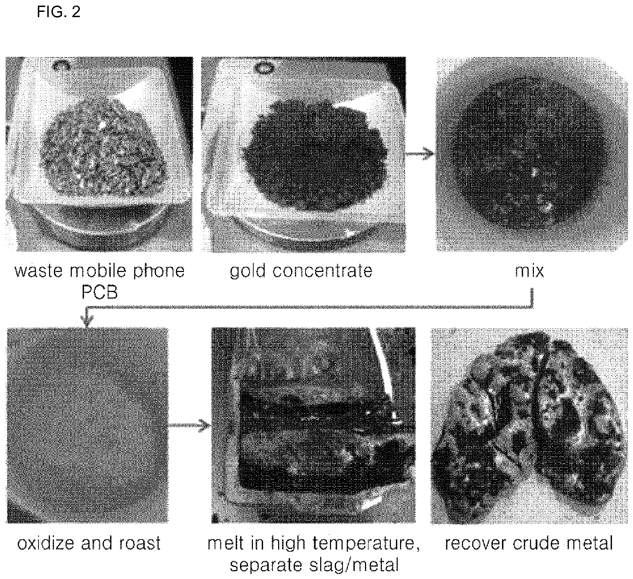

FIG. 2 shows photographs of results of each process step according to a method for concentrating and recovering noble metals according to an embodiment of the present invention.

Referring to FIG. 2, after mixing the crushed product of the waste mobile phone printed circuit board and gold concentrate and after oxidizing and roasting, it was confirmed that when melted at a high temperature, the slag and the metal were separated.

In the case of electrolytic leaching with the separated metal as a crude metal, it was possible to concentrate the noble metal into the anode electrolytic leach residue, and at the same time, it was possible to incidentally recover copper having a purity of 90% or more at the cathode.

**[Table 1]**

| Material | Dissolved/recovered amount (g) | Classification | Cu | Zn | Pb | Fe | Ni | Co | Sn | Ag | Au | Pd | Pt | Rh | total | Noble metal content³⁾ |
|---|---|---|---|---|---|---|---|---|---|---|---|---|---|---|---|---|
| Anode (%) | 56.46 | Composition ratio | 85.6 | 2.01 | 1.38 | 2.74 | 1.91 | 0 | 5.92 | 0.29 | 0.25 | 0.25 | 0.062 | 0.014 | 100.4 | 0.866 |
| Leach residue (%) | 8.1529 | Composition ratio | 13 | 2.18 | 7.67 | 3.16 | 0.06 | 0 | 31.6 | 0.75 | 1.56 | 1.43 | 0.49 | 0.11 | 62.01 | 4.3400 |
| | | Distribution ratio²⁾ | 2.44 | 14.96 | 88.20 | 3.94 | 0.32 | 0 | 94.10 | 99.61 | 100.00 | 100.00 | 100.00 | 100.00 | - | - |
| Cathode electro deposit (%) | 29.3956 | Composition ratio | 99.7 | 0 | 0.24 | 0 | 0 | 0 | 0.32 | 0 | 0 | 0 | 0 | 0 | 100.26 | 0 |
| | | Distribution ratio | 67.35 | 0 | 9.95 | 0 | 0 | 0 | 3.44 | 0 | 0 | 0 | 0 | 0 | - | - |
| Electrolyte (%) | 2.05¹⁾ | Metal Composition ratio | 59.6 | 4.6 | 0.1 | 28.5 | 6.9 | 0.1 | 0.3 | 0.001092 | 0 | 0 | 0 | 0 | - | 0.0011 |
| | | Distribution ratio | 30.21 | 85.04 | 1.85 | 96.06 | 99.68 | 100.00 | 2.47 | 0.39 | 0 | 0 | 0 | 0 | - | - |

Here, ¹⁾ is the total amount of the metal components in the electrolyte calculated from an ICP analysis, ²⁾ is the distribution ratio of the metal for each respective material when the dissolved anode is taken as 100%, and ³⁾ shows how much of each material contains the noble metal, respectively.

Table 1 shows the distribution pattern of each material in the anode, anode electrolytic leach residue and cathode upon electrolytic leaching.

Referring to Table 1, it was confirmed that the electrolytic leach residues contain 4.34% of noble metal, and it was confirmed that a large amount of copper was recovered in the cathode electrodeposit.

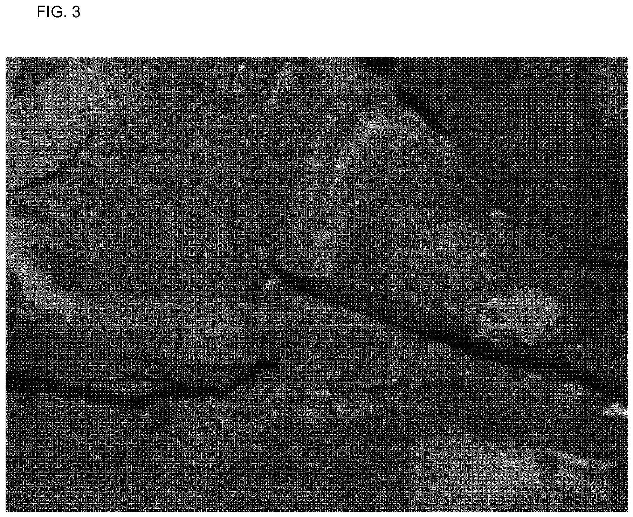

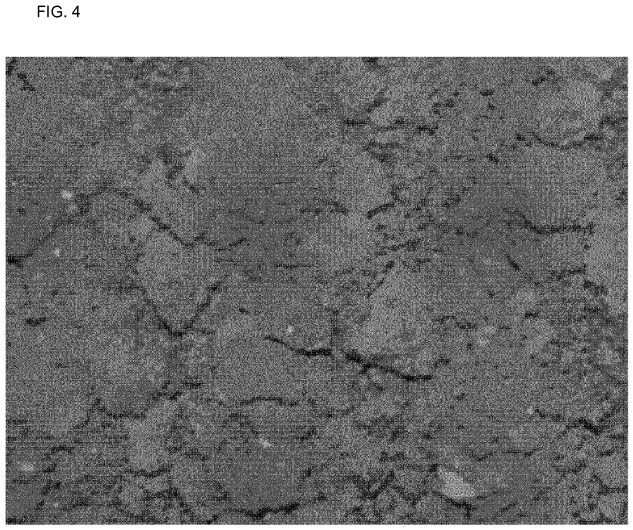

FIG. 3 and FIG. 4 are photographs of an electrolytic leach residue and a copper electrodeposit formed on a cathode in a method for concentrating and recovering noble metals using a waste mobile phone printed circuit board according to an embodiment of the present invention.

Referring to the drawings, it was confirmed that copper was recovered from the cathode to form a copper electrodeposit.

**[Table 2]**

| Sulfuric acid dissolution conditions | | | Residue weight | Content | | | | | | |
|---|---|---|---|---|---|---|---|---|---|---|
| H₂SO₄(M) | Tempe rature(°C) | Time(min) | | Gold | Silver | Palladium | Platinum | Rhodium | Total | Quality (%) |
| 1.0 | 90 | 180 | 1.43 | 18.6 | 2.81 | 19.6 | 11.2 | 3.8 | 56.01 | 3.92 |
| 2.0 | 90 | 180 | 1.18 | 16.8 | 2.87 | 17.32 | 9.0 | 1.81 | 47.8 | 4.05 |
| 3.0 | 90 | 180 | 0.55 | 18.44 | 2.62 | 19.16 | 9.0 | 3.67 | 52.89 | 9.62 |
| 4.0 | 90 | 180 | 0.49 | 17.28 | 3.21 | 17.96 | 9.0 | 3.50 | 50.95 | 10.4 |

The Table 2 above shows concentration of noble metal by sulfuric acid dissolution of the electrolytic leach residue.

Referring to Table 2, in the case of 3.0 M sulfuric acid, the noble metals including gold and silver were concentrated to 18.44 mg and 2.62 mg, respectively, and the quality was 9.62%.

### <Example i> Noble metal recovery / borax 19.52 wt%

Step 3: In step 2 of Example 1 above, after the oxidized and roasted mixture was heat-treated at 1400 °C to confirm formation of molten material and slag, borax was added to be 19.52 wt% with respect to the slag content. Then, after treatment at a temperature of 1300 °C for 4 hours, the slag and the crude metal were separated.

### <Example ii> Noble metal recovery / borax 31.32 wt%

In the above Example i, other than the added amount of borax being 31.32 wt% with respect to the slag content in step 3, slag and crude metal were separated by being performed in the same manner as Example i.

### <Example iii> Noble metal recovery / borax 46.00 wt%

In the above Example i, other than the added amount of borax being 46.00 wt% with respect to the slag content in step 3, slag and crude metal were separated by being performed in the same manner as Example i.

### <Comparative Example i> Noble metal recovery / borax 8.45 wt%

In the above Example i, other than the added amount of borax being 8.45 wt% with respect to the slag content in step 3, slag and crude metal were separated by being performed in the same manner as Example i.

### <Experimental Example i> Slag composition analysis results

The content of each component (wt%) of the slag separated in Examples i to iii and Comparative Example i was measured by ICP-OES at a temperature of 24 ± 3 °C, and a relative humidity of 29 ± 7%.

**[Table 3]**

| Classification | Comparative example i | Example i | Example ii | Example iii |
|---|---|---|---|---|
| SiO₂ | 48.1 | 48.8 | 46.4 | 40.8 |
| Al₂O₃ | 14.1 | 15.0 | 13.6 | 12.1 |
| FeO | 15.2 | 15.7 | 12.8 | 15.0 |
| Fe₂O₃ | 19.9 | 17.0 | 14.3 | 17.3 |
| CaO | 7.72 | 7.93 | 7.60 | 7.20 |
| Na₂O | 0.15 | 2.25 | 4.02 | 5.67 |
| B₂O₃ | 5.71 | 10.3 | 14.7 | 19.6 |
| Cu | 0.85 | 0.46 | 0.38 | 0.58 |
| Pb | 0.087 | Less than 0.0050 | Less than 0.0050 | Less than 0.0050 |
| Ni | 0.036 | 0.024 | 0.020 | 0.034 |
| Sn | 0.086 | 0.026 | 0.027 | 0.043 |

| | | | | |
|---|---|---|---|---|
| (Unit: wt%) | | | | |

Further, the contents (mg/kg) of the slag and the noble metal in the crude metal of Example i and Comparative Example i were also measured in the same manner as described above, and is shown in Table 4.

**[Table 4]**

| Classification | Comparative example i Slag | Comparative example i Crude metal | Example i Slag | Example i Crude metal |
|---|---|---|---|---|
| Au | 58.6 | 6.10 | 2.80 | 13.2 |
| Ag | 12.9 | 28.0 | 2.14 | 27.9 |

| | | | | |
|---|---|---|---|---|
| (Unit: mg/kg) | | | | |

Referring to Table 4, it can be confirmed that the noble metals are relatively concentrated in the slag in the case of Comparative Example i in which borax is added in an amount of 8.45 wt% with respect to the total slag. On the other hand, in Example i in which borax was added in an amount of 19.52 wt% with respect to the total slag, it was shown that the content of gold was 2.80 ppm and the content of silver was 2.14 ppm in the slag. In the crude metal, it was confirmed that the content of gold and silver was 13.2 ppm and 27.9 ppm, respectively. Therefore, it was confirmed that the noble metal can be easily separated from the slag by adding borax at a weight ratio of the above-mentioned examples.

Accordingly, the method for concentrating and recovering noble metals using a copper-containing material according to the present invention allows recovering the copper-containing material by using a gold concentrate, which is difficult to recover noble metal with high purity due to low purity, and it is also possible to greatly increase the recovery efficiency of noble metals such as gold, silver, platinum, palladium and rhodium as well as copper, by greatly increasing the purity of the noble metal recovered by smelting. It is possible to provide a new noble metal recovery method using a gold concentrate, which is difficult to recover valuable metals and noble metals from by using the conventional dry smelting, and a copper-containing material.

Although a specific embodiment related to a method for concentrating and recovering noble metals noble metal according to an aspect of the present invention was described, it is apparent that various modifications can be made without departing from the scope of the present invention which is defined in the appended claims.

## Claims

1. A method for concentrating and recovering noble metals, comprising,
crushing a copper-containing material and preparing a mixture by mixing the same with a gold concentrate (step 1);
oxidizing and roasting the prepared mixture by heat-treating (step 2);
melting the oxidized and roasted mixture to separate and recover slag and crude metal (step 3); and
electrolytic leaching the crude metal to concentrate the noble metal into an electrolytic leach residue (step 4).

2. The method of claim 1, wherein the noble metal is any one or two or more selected from the group consisting of gold, silver, platinum, palladium, and rhodium.

3. The method of claim 1, wherein the copper-containing material of said step 1 is one or more selected from the group consisting of a printed circuit board, a waste printed circuit board, and a by-product from a printed circuit board manufacturing process.

4. The method of claim 1, wherein the crushing of said step 1 is performed such that the copper-containing material has a particle size of 1 mm to 10 mm.

5. The method of claim 1, wherein a mixing weight ratio of the copper-containing material and the gold concentrate of the said step 1 ranges from 1 : 0.1 to 1 : 2.

6. The method of claim 1, wherein the heat-treatment temperature in said step 2 ranges from 600 °C to 900 °C.

7. The method of claim 1, wherein the oxidizing and roasting of said step 2 is carried out in a rotary kiln or a flow roasting furnace, and is carried out in an oxygen atmosphere by introducing an atmospheric environment or oxygen.

8. The method of claim 1, wherein the oxidizing and roasting of said step 2 further comprises treating a waste gas to remove noxious gas generated during oxidizing and roasting of a crushed product.

9. The method of claim 1, wherein a melting temperature of said step 3 ranges from 1300 °C to 1700 °C.

10. The method of claim 1, wherein said step 3 further comprises melting the oxidized and roasted mixture and adding a boron compound to a slag that is generated.

11. The method of claim 10, wherein the boron compound in said step 3 is one or more selected from the group consisting of borax (Na₂B₄O₇·10H₂O), sodium borate (Na₂B₄O₇), sodium meta-borate (NaBO₂) and hydrates thereof.

12. The method of claim 10, wherein the boron compound added in said step 3 is added in a weight ratio of 10 wt% to 50 wt% with respect to the slag.

13. The method of claim 10, wherein the boron compound is added in said step 3 such that the slag is composed to comprise,
30.8 wt% to 58.8 wt% of silica (SiO₂);
0.1 wt% to 20 wt% of alumina (Al₂O₃);
7.8 wt% to 20.7 wt% of divalent iron oxide (FeO);
9.3 wt% to 24.9 wt% of trivalent iron oxide (Fe₂O₃);
4.2 wt% to 10.9 wt% of calcium oxide (CaO);
1.25 wt% to 10.7 wt% of sodium oxide (Na₂O); and
8.3 wt% to 21.6 wt% of boron oxide (B₂O₃).

14. The method of claim 1, wherein in said step 4, the crude metal is subject to electrolytic leaching with a current density of 5 A/cm² to 40 A/cm².

15. The method of claim 1, wherein the electrolytic leaching of the crude metal of said step 4 further comprises recovering copper from a cathode upon electrolytic leaching.

16. The method of claim 1, wherein in said step 4, the electrolytic leach residue is acid leached to recover the noble metal.

## Patentansprüche

1. Verfahren zum Konzentrieren und Wiedergewinnen von Edelmetallen, umfassend:
Zerkleinern eines kupferhaltigen Materials und Herstellen einer Mischung durch Mischen derselben mit einem Goldkonzentrat (Schritt 1);
Oxidieren und Rösten der hergestellten Mischung durch Wärmebehandeln (Schritt 2);
Schmelzen der oxidierten und gerösteten Mischung, um Schlacke und Rohmetall abzutrennen und wiederzugewinnen (Schritt 3); und
elektrolytisches Auslaugen des Rohmetalls, um das Edelmetall zu einem elektrolytischen Auslaugungsrest zu konzentrieren (Schritt 4).

2. Verfahren nach Anspruch 1, wobei das Edelmetall eines oder zwei oder mehrere ist, die ausgewählt sind aus der Gruppe bestehend aus Gold, Silber, Platin, Palladium und Rhodium.

3. Verfahren nach Anspruch 1, wobei das kupferhaltige Material des Schritts 1 eines oder mehrere ist, die ausgewählt sind aus der Gruppe bestehend aus einer Leiterplatte, einem Leiterplattenabfall und einem Nebenprodukt aus einem Leiterplattenherstellungsprozess.

4. Verfahren nach Anspruch 1, wobei das Zerkleinern des Schrittes 1 derart durchgeführt wird, dass das kupferhaltige Material eine Teilchengröße von 1 mm bis 10 mm aufweist.

5. Verfahren nach Anspruch 1, wobei ein Mischgewichtsverhältnis des kupferhaltigen Materials und des Goldkonzentrats des Schrittes 1 im Bereich von 1:0,1 bis 1:2 liegt.

6. Verfahren nach Anspruch 1, wobei die Wärmebehandlungstemperatur in dem Schritt 2 im Bereich von 600 °C bis 900 °C liegt.

7. Verfahren nach Anspruch 1, wobei das Oxidieren und Rösten des Schrittes 2 in einem Drehrohrofen oder einem Durchflussröstofen durchgeführt wird und in einer Sauerstoffatmosphäre durch Einbringen einer atmosphärischen Umgebung oder von Sauerstoff durchgeführt wird.

8. Verfahren nach Anspruch 1, wobei das Oxidieren und Rösten des Schrittes 2 ferner das Behandeln eines Abgases umfasst, um schädliches Gas zu entfernen, das während des Oxidierens und Röstens eines zerkleinerten Produkts erzeugt wird.

9. Verfahren nach Anspruch 1, wobei eine Schmelztemperatur des Schrittes 3 im Bereich von 1300 °C bis 1700 °C liegt.

10. Verfahren nach Anspruch 1, wobei der Schritt 3 ferner das Schmelzen der oxidierten und gerösteten Mischung und das Zugeben einer Borverbindung zu einer Schlacke umfasst, die erzeugt wird.

11. Verfahren nach Anspruch 10, wobei die Borverbindung in dem Schritt 3 eine oder mehrere ist, die ausgewählt sind aus der Gruppe bestehend aus Borax (Na₂B₄O₇·10H₂O), Natriumborat (Na₂B₄O₇), Natriummetaborat (NaBO₂) und Hydraten davon.

12. Verfahren nach Anspruch 10, wobei die in Schritt 3 zugegebene Borverbindung in einem Gewichtsverhältnis von 10 Gew.-% bis 50 Gew.-% in Bezug auf die Schlacke zugegeben wird.

13. Verfahren nach Anspruch 10, wobei die Borverbindung in dem Schritt 3 derart zugegeben wird, dass die Schlacke zusammengesetzt ist, um Folgendes zu umfassen: 30,8 Gew.-% bis 58,8 Gew.-% Siliciumdioxid (SiO₂);
0,1 Gew.-% bis 20 Gew.-% Aluminiumoxid (Al₂O₃);
7,8 Gew.-% bis 20,7 Gew.-% zweiwertiges Eisenoxid (FeO);
9,3 Gew.-% bis 24,9 Gew.-% dreiwertiges Eisenoxid (Fe₂O₃);
4,2 Gew.-% bis 10,9 Gew.-% Calciumoxid (CaO);
1,25 Gew.-% bis 10,7 Gew.-% Natriumoxid (Na₂O); und
8,3 Gew.-% bis 21,6 Gew.-% Boroxid (B₂O₃).

14. Verfahren nach Anspruch 1, wobei in dem Schritt 4 das Rohmetall einem elektrolytischen Auslaugen mit einer Stromdichte von 5 A/cm² bis 40 A/cm² unterzogen wird.

15. Verfahren nach Anspruch 1, wobei das elektrolytische Auslaugen des Rohmetalls des Schrittes 4 ferner das Wiedergewinnen von Kupfer aus einer Kathode beim elektrolytischen Auslaugen umfasst.

16. Verfahren nach Anspruch 1, wobei in dem Schritt 4 der elektrolytische Auslaugungsrest säureausgelaugt wird, um das Edelmetall wiederzugewinnen.

## Revendications

1. Procédé de concentration et de récupération de métaux nobles, comprenant :
l'écrasement d'un matériau contenant du cuivre et la préparation d'un mélange en mélangeant ce dernier à un concentré d'or (étape 1) ;
l'oxydation et le grillage du mélange préparé par traitement thermique (étape 2) ;
la fusion du mélange oxydé et grillé pour séparer et récupérer la scorie et le métal brut (étape 3) ; et
la lixiviation électrolytique du métal brut pour concentrer le métal noble en un résidu de lixiviation électrolytique (étape 4).

2. Procédé selon la revendication 1, dans lequel le métal noble est l'un quelconque ou deux ou plus de métaux sélectionnés dans le groupe composé de l'or, de l'argent, du platine, du palladium et du rhodium.

3. Procédé selon la revendication 1, dans lequel le matériau contenant du cuivre de ladite étape 1 est un matériau ou plus sélectionné dans le groupe composé d'un circuit imprimé, d'un résidu de circuit imprimé, et d'un produit secondaire d'un processus de fabrication de circuit imprimé.

4. Procédé selon la revendication 1, dans lequel l'écrasement de ladite étape 1 est réalisé de manière à ce que le matériau contenant du cuivre ait une taille de particules de 1 mm à 10 mm.

5. Procédé selon la revendication 1, dans lequel un rapport de poids de mélange entre le matériau contenant du cuivre et le concentré d'or de ladite étape 1 va de 1:0,1 à 1:2.

6. Procédé selon la revendication 1, dans lequel la température de traitement thermique dans ladite étape 2 va de 600 °C à 900 °C.

7. Procédé selon la revendication 1, dans lequel l'oxydation et le grillage de ladite étape 2 sont réalisés dans un four rotatif ou un fourneau de grillage d'écoulement, et sont réalisés dans une atmosphère d'oxygène en introduisant un environnement atmosphérique ou de l'oxygène.

8. Procédé selon la revendication 1, dans lequel l'oxydation et le grillage de ladite étape 2 comprennent en outre le traitement d'un gaz résiduel pour éliminer le gaz nocif généré pendant l'oxydation et le grillage d'un produit écrasé.

9. Procédé selon la revendication 1, dans lequel une température de fusion de ladite étape 3 va de 1300 °C à 1700 °C.

10. Procédé selon la revendication 1, dans lequel ladite étape 3 comprend en outre la fusion du mélange oxydé et grillé et l'ajout d'un composé de bore dans une scorie qui est générée.

11. Procédé selon la revendication 1, dans lequel le composé de bore de ladite étape 3 est un ou plusieurs composés sélectionnés dans le groupe composé du borax (Na₂B₄O₇·10H₂O), du borate de sodium (Na₂B₄O₇), du métaborate de sodium (NaBO₂) et de leurs hydrates.

12. Procédé selon la revendication 10, dans lequel le composé de bore ajouté dans ladite étape 3 est ajouté dans un rapport de poids de 10 % en poids à 50 % en poids par rapport à la scorie.

13. Procédé selon la revendication 10, dans lequel le composé de bore est ajouté dans ladite étape 3 de manière à ce que la scorie soit composée de façon à comprendre :
30,8 % en poids à 58,8 % en poids de silice (SiO₂);
0,1 % en poids à 20 % en poids d'alumine (Al₂O₃),
7,8 % en poids à 20,7 % en poids d'oxyde de fer divalent (FeO) ;
9,3 % en poids à 24,9 % en poids d'oxyde de fer trivalent (Fe₂O₃),
4,2 % en poids à 10,9 % en poids d'oxyde de calcium (CaO) ;
1,25 % en poids à 10,7 % en poids d'oxyde de sodium (Na₂O), et
8,3 % en poids à 21,6 % en poids d'oxyde de bore (B₂O₃).

14. Procédé selon la revendication 1, dans lequel, dans l'étape 4, le métal brut est soumis à une lixiviation électrolytique avec une densité de courant de 5 A/cm² à 40 A/cm².

15. Procédé selon la revendication 1, dans lequel la lixiviation électrolytique du métal brut de ladite étape 4 comprend en outre la récupération de cuivre d'une cathode lors d'une lixiviation électrolytique.

16. Procédé selon la revendication 1, dans lequel, dans ladite étape 4, le résidu de lixiviation électrolytique est lixivié avec de l'acide pour récupérer le métal noble.
